# EUROPEAN PATENT SPECIFICATION

(11) **EP 4 097 378 B1**
(45) Date of publication and mention of the grant of the patent: **12.06.2024**
(21) Application number: 21702093.2
(22) Date of filing: 25.01.2021
(51) Int. Cl.: F01C 19/00, F01C 21/10, F04C 27/00, F16J 15/06, F04C 25/02, F16J 15/02, F04C 23/00, F04C 18/12

(54) **A PUMP AND A SET OF SEALS SEALING THE STATOR COMPONENTS OF SUCH A PUMP**
PUMPE UND DICHTUNGSSATZ FÜR DIE STATORBAUTEILE EINER SOLCHEN PUMPE
POMPE ET ENSEMBLE DE JOINTS D'ÉTANCHÉITÉ SCELLANT LES COMPOSANTS DE STATOR D'UNE TELLE POMPE

(30) Priority: 30.01.2020 GB 202001318
(43) Date of publication of application: 07.12.2022
(73) Proprietor: Edwards Limited, Burgess Hill, Sussex RH15 9TW (GB)
(72) Inventor: HOLBROOK, Alan Ernest Kinnaird, Burgess Hill Sussex RH15 9TW (GB)
(74) Representative: Arnold, Emily Anne
(86) International application number: PCT/GB2021/050163
(87) International publication number: WO 2021/152294

(56) References cited:
- GB-A- 2 559 134
- US-A- 4 790 058
- US-A1- 2013 032 293

## Description

### FIELD OF THE INVENTION

The field of the invention relates to a set of seals for sealing between different stator components of a pump and to a pump comprising such seals.

### BACKGROUND

The mounting of a rotor within a stator of some pump assemblies is made simpler by the use of half or clam shell stators. This allows the rotor to be placed within one half shell and the other half shell to be fitted on top. Head plates or end pieces are then used at either end of the stator to support bearings and drive systems. A seal is required between the stator half shells and between the end pieces and stator.

The split line between the stators reaches the seal that seals between the head plates and stator at a so-called T-joint. These T-joints are sealed with a combination of axial and annular seals, which are compressed. The complex geometry of the T-seal causes the seals to distort when compressed. The main challenge is to keep the seals in contact with the housings and in contact with each other across a range of operational temperatures. This is a challenging problem made increasingly difficult as the range of temperatures of pump operation increases.

It would be desirable to provide a set of seals for sealing the stator components of a half shell stator that provides effective sealing across a range of operational temperatures.

GB 2,559,134 provides a vacuum pump having the features of the preamble to claim 1.

### SUMMARY

The present invention provides a vacuum pump in accordance with claim 1.

The inventor of the present invention recognised that as the temperature range of operation of half shell stator pumps increases there is a requirement to look for new materials for the seals, which materials should be able to withstand larger temperature ranges and in particular, higher temperatures without becoming unduly degraded.

In embodiments it is possible that there could be at least one longitudinal seal for sealing between longitudinal contact faces of said two half shell stators on at least one side of said at least one pumping chamber.

Selecting new materials for seals with the challenging requirements of a T-joint is a complex matter, however, the inventor of the present invention discovered that the properties of stiffness and/or hardness were particularly good predictors of a good sealing material for such T-joint seals, and indeed were seals to be formed of a material with stiffness and/or hardness within a particular range such seals would generally seal effectively.

It has been found that variations in the compression applied to each seal cause corresponding changes in their internal stresses and in their distortion. The geometry of a seal to seal interface is particularly affected by such changes where the stress experienced by each seal at the interface due to changes in operating conditions, such as an increase in temperature, is different. If the stress on one seal increases differently to the stress on the other then it will result in a stress mismatch which will affect the geometry of the seal interface and therefore the sealing properties of the interface will change. This problem has been addressed by providing seals with stiffness and/or hardness within certain limits. The range for the stiffness and/or hardness has been selected to reduce stress changes within the seals and as each seal is formed of a similar stiffness and/or hardness any mismatch in stress experienced by each seal will be small, with correspondingly small changes in the interface geometry between the seals as the temperature of operation changes, providing effective operation across a wide temperature range.

In this regard, an elastomer stiffness that is too low causes the seals to distort excessively when compressed, which leads to an unpredictable interface between the axial and annular seals. An elastomer stiffness that is too high generates large variations in the sealing pressures, causing a T-seal leak when the compressions of the axial and annular seals are not balanced. Using a specific stiffness range ensures that a T-seal functions well over the full design compression ranges for the axial and annular seals.

Conventionally, the stiffness of the sealing materials used for these T-joint seals has not been considered and in particular the longitudinal seals have generally been formed of a softer material than the harder annular seals. It was known that a softer material for the longitudinal seal allowed it to flow towards the annular seal when compressed, with the annular seal able to restrain the end of the longitudinal seal. The inventor discovered that selecting materials with stiffness and/or hardness within a certain range for all of the seals within the set of seals provided effective sealing and enabled new materials to be selected simply on stiffness or hardness values, making the selection and testing of new materials substantially more straightforward. Furthermore, it was found that making the set of seals of materials of similar hardness and/or stiffness allowed the end of the longitudinal seal and the annular seal to substantially retain their form at their intersection providing for a good sealing surface.

In some embodiments, said seals of said set of seals is made of a material having both of:
a hardness between 74 - 80 on the Shore A hardness scale; and
a stiffness of between 2.4 and 4.2 N/mm per mm length, wherein said stiffness is measured by compressing an O-ring of said material, said O-ring having a cross section diameter of 3.4mm and an internal diameter of at least 40mm.

It has been found that both stiffness and hardness are a good predictor of the effectiveness of the seals and thus, the seals may be selected on one of these properties, however in some embodiments both hardness and stiffness may be used to select the materials such that the materials that have properties within the required range for both of these properties may be selected.

It should be noted that stiffness of a component is a function both of its configuration and of the material of which it is formed, and thus, a test to determine the stiffness of the material was devised that was appropriate for the seals in the set. The test involved the axial compression of an O-ring test seal, in which the seal is laid on a flat surface and compressed by a weighted flat surface with increasing weights at room temperature. The deflection vs weight is a measure of the stiffness of the O-ring and was determined for increasing masses in one example from 0.5 to 8Kg. The stiffness/unit length is then determined from these results the length of the O-ring being its centreline length.

In some test a graph may be formed of force against deflection and the gradient of the slope provides the force/ deflection and the result is then divided by the centreline length of the O-ring to get a force/ deflection per unit length value.

In summary the stiffness values within the range quoted here are those that are determined using a test material that is in the form of an O ring which has a cross sectional diameter of 3.4mm +/- 10% and an internal diameter that is larger than 40mm. The axial direction is the direction of an axis through the centre of the circle that the O-ring forms such that in effect the O-ring is a face seal. The deflection which reflects the decrease in the cross-section diameter of the O-ring when compressed is measured and the stiffness is provided as the force required to provide a millimetre deflection for a millimetre length.

The hardness of the material is determined using a standard Shore durometer which is a device for measuring the hardness of a material, typically of polymers, elastomers, and rubbers. Higher numbers on the Shore scale indicate a greater resistance to indentation and thus harder materials. Lower numbers indicate less resistance and softer materials. The shore A hardness number is determined by the penetration of the Durometer indenter into the sample. The international test method designation is ISO 48-4:2018.

In some embodiments, said stiffness of said material is between 2.6 and 3.8 N/mm per mm length.

Although a stiffness of between 2.4 to 4.3 N/mm per mm length has been found to provide an effective seal a stiffness within the range of 2.6 to 3.8 N/mm per mm length is found to be preferable, and even more preferable is a stiffness between 2.8 and 3.4 N/mm per mm length.

Although the seal may be formed of a variety of materials that are able to withstand the required temperatures and have the required elastomeric properties, fluorinated elastomer and nitrides have been found to be effective.

In some embodiments, said material is a material resistant to temperatures in excess of 200 °C.

Temperatures or operations of pumps may be in excess of 200 °C and it is at this point that many elastomers may degrade. In effect their effective lifetime decreases significantly as their elastomeric properties degrade at these high temperatures and their sealing effectiveness deteriorates. A material is deemed to be resistant to a particular temperature if the material maintains its elastic properties over several months of operation at that temperature.

Although there are a variety of materials with the required stiffness and hardness that are resistant to these temperatures, in some embodiments said material comprises a perfluoroelastomer.

A perfluoroelastomer has been found to be particularly effective at resisting the high temperatures and provide effective sealing where they have a stiffness and/or a hardness within the required limit.

Fluorinated elastomers contain either a partially or fully fluorinated backbone. If the backbone is fully fluorinated, it is a perfluoroelastomer (FFKM); if it is partially fluorinated, it is a fluoroelastomer (FKM). The polymer backbone is comprised of many repeating monomer units.

Although, the annular seals and longitudinal seals may be formed of different materials provided they are both materials with hardness and/or stiffness within the required limits, in some embodiments, they are formed of the same material.

As noted previously, variations in the stress and compression on each seal causes corresponding changes in their elastomeric properties and in their distortion, thus, forming them of similar materials, particularly where they have a similar sized cross section may improve their performance.

In some embodiments, said longitudinal seal has a thickness of more than 1.5 mm, in particular, said longitudinal seal has a thickness of more than 1.8 mm, preferably more than 2.2 mm.

The properties of the longitudinal seal have also found to be improved if the longitudinal seal is provided with a thickness that it is more of a 1.5 mm and in some cases more than 1.8 mm preferably more than 2.2 mm.

The stresses within the seal are dependent both on the stiffness of the material and on its thickness, and thus, it may be advantageous when selecting a material of a particular stiffness to make the longitudinal seal thicker than it would conventionally be and closer in thickness to the annular seal. In this regard, in some embodiments, the annular seal has a cross section diameter of more than 3mm, in order to improve sealing quality and reduce compression range, in some embodiments the annular seal has a cross section diameter of between 3.0 and 3.8 mm. Providing the longitudinal seal of a similar thickness allows the stress and compression felt by each seal to be similar and as they are formed of the same material they thus, experience similar changes in their elastomeric properties and in their distortion providing an effective seal. The thickness of the seal is the distance between the two longitudinal surfaces that contact the half shell of the stator when the seal is not compressed.

In some embodiments the cross section of the annular seal and the longitudinal seal differs from each other by less than 50%.

In some embodiments, at least one end of said longitudinal seal configured to abut against said annular seal comprises a flat end surface prior to said seal being compressed.

Although, longitudinal seals with contoured end surfaces adapted for the shape of the annular seal are known, it has been found that a longitudinal seal with a flat surface is particularly effective where materials of the required stiffness are used.

The seals are mounted within grooves within the stator components.

In some embodiments, each of said seals within said set of seals are made of: FFKM: Trelleborg Isolast^{®} J9577. This material has a density of 2.00+/- 0.03 g/cm³, a specific gravity of 2.00, and a hardness of 80 Shore A. It is available from Trelleborg Sealing Solutions UK Ltd (U.K).

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 shows the measured stiffness of a plurality of test materials;
Figure 2 shows the apparatus used to test the materials;
Figure 3 schematically shows the stator components to be sealed by a set of seals according to an embodiment; and
Figure 4 schematically shows the seals within the stator components.

### DESCRIPTION OF THE EMBODIMENTS

Before discussing the embodiments in any more detail, first an overview will be provided.

Vacuum pumps with a clam-shell construction have T-joints between the stators (clams) and the headplates. These T-joints are sealed with a combination of axial and annular seals, which are compressed. The complex geometry of the T-seal causes the seals to distort when compressed. The main challenge is to keep the seals in contact with the housings and in contact with each other at all possible compressions and all operational temperatures.

Embodiments provide a specific T-seal design which reduces variation in the compression of the axial seals. Many elastomeric materials were evaluated in this T-seal design and the majority failed, a seal was deemed to fail where there is a leak rate above 1 × 10-⁶ mbar.l/s. The failures have either been at room temperature or elevated temperatures such as 180 °C or 220 °C.

It was observed that a predictor of failure was the elastomer stiffness and/or hardness of the material and that when it was in a specific range, the T-seals perform well across the required range of operating temperatures. Embodiments provide T-seals formed of a material with this specific range of stiffness and/or hardness.

In this regard, an elastomer stiffness that is too low causes the seals to distort excessively when compressed, which leads to an unpredictable interface between the axial and annular seals. An elastomer stiffness that is too high generates large variations in the sealing pressures, causing a T-seal leak when the compressions of the axial and annular seals are not balanced. Using a specific stiffness range ensures that a T-seal functions well over the full design compression ranges for the axial and annular seals.

It was also found that elastomer hardness properties provided a similar measure of suitability for the seals. However, stiffness provided a better predictor and therefore, a simple O-ring stiffness measurement was devised to identify suitable materials. This test involved the compression of the whole area of the O-ring under several loads.

The measured O-ring cross-section diameter was 3.4 mm +/- 10%

The preferred stiffness is 3.12 N/mm per mm of O-ring length, however, materials in the range of 2.4 and 4.2 N/mm per mm length were found to have suitable properties.

A specific material that has this property and have worked well in T-seals is: FFKM: Trelleborg Isolast^{®} J9577.

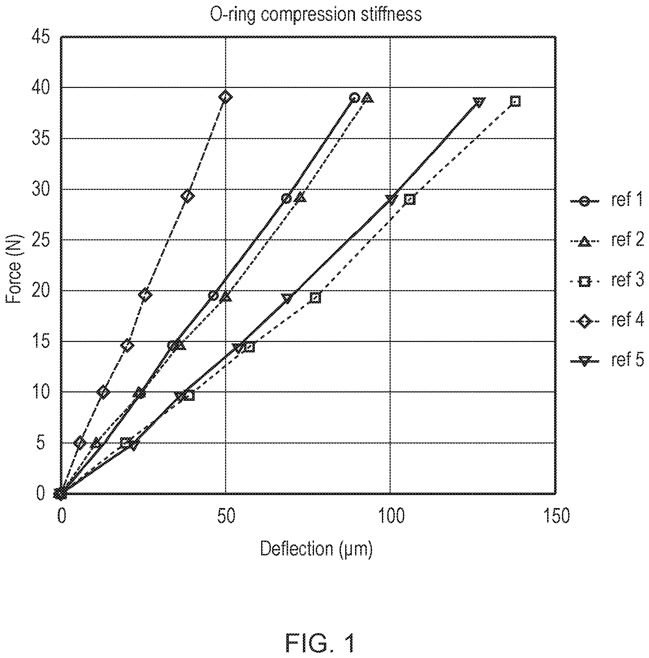

Figure 1 shows a graph indicating force versus deflection for different materials tested using the O-ring compression test described previously.

In this regard the centreline length of each O-ring tested was between 135 and 145 mm and the determined stiffness for each of ref1 to ref5 was respectively: 3.12, 2.99, 2.00, 2.18, 5.60.

Thus, the materials ref1 and ref2 had the desired stiffness properties, that is a stiffness within the range 2.4 and 4.2 N/mm per mm length. The hardness of these two materials was 75 and 80 on the shore A scale and thus, this too was within the desired range and both values were a predictor of suitability.

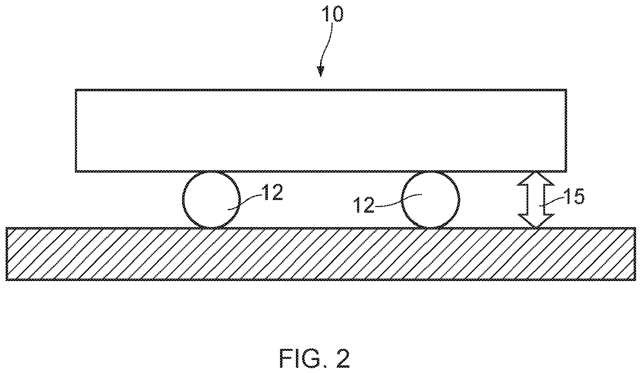

Figure 2 schematically shows the test apparatus used for determining the compression stiffness of the material. A test O-ring 12 having an internal diameter of more than 40 mm and a cross section diameter of 3.4 +/-10% mm was tested for its stiffness by laying it on a flat surface and then placing another flat surface above the O-ring and compressing the O-ring with different loads 10 and measuring the deflection 15. The results were then plotted on a graph such as that shown in Figure 1 and the stiffness determined therefrom.

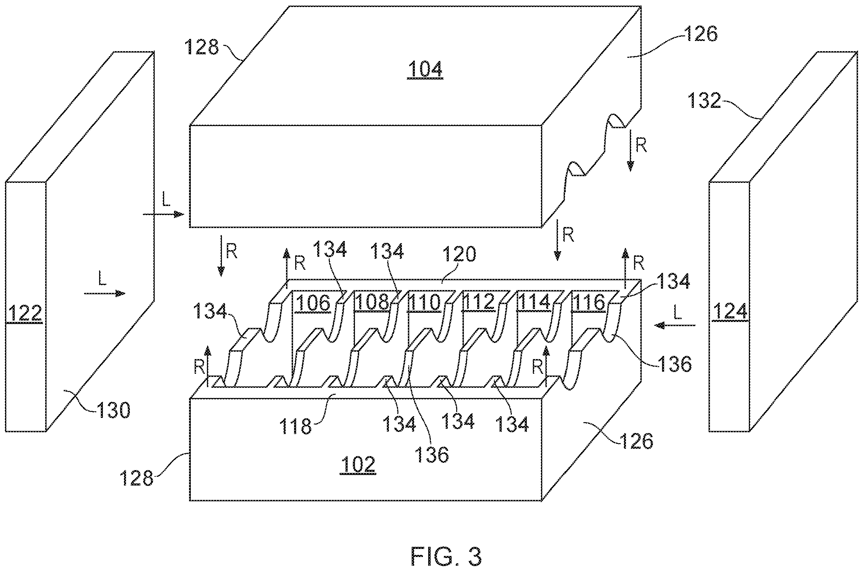

Figure 3 schematically shows a multiple chamber rotary pump assembly, with two stator half shells and end pieces, which assembly may be advantageously sealed using seals according to embodiments. The pump assembly is formed of two stator half shells 104 and 102 between which a rotor (not shown) is mounted.

The two shells are fixed together to form the pump chambers. Each of the chambers 106, 108, 110, 112, 114 & 116 are separated by pump chamber walls 134. End pieces 122 and 124 are mounted on the half shells of the stators to complete the pump assembly. The longitudinal seals are mounted on the stator shell contact surfaces 118, 120, while the annular seals (not shown) are mounted on the mating surfaces of the end pieces 130, 132.

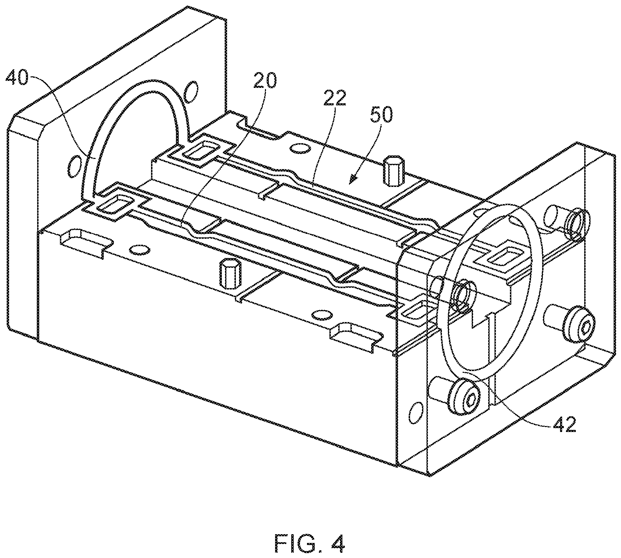

Figure 4 shows an isometric view of the seals that are arranged between the stator half shells and between the end faces. In this embodiment, there are longitudinal seals 20 and 22 within grooves 50 on either side of the pumping chamber. There are also O-ring seals 40 and 42 also mounted within grooves between the end pieces and the stator half shells.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims.

### REFERENCE SIGNS

10 load applied to O-ring
12 test O-ring
15 deflection
20, 22 longitudinal seal
106, 108, 110, 112, 114 & 116 pump chambers
40, 42 O-ring seal
50 groove
102, 104 stator half shell
118, 120 contact surface between stator half shells
122, 124 end pieces
126, 128 mating end surface of stator half shells
130, 132 mating surface of end pieces
134 pump chamber walls

## Claims

1. A vacuum pump comprising a rotor rotatably mounted within a stator, said stator comprising:
two half shells (102, 104) defining at least one pumping chamber (106, 108, 110, 112, 114, 116); and
two head plates mounted at either end of said two half shells (102, 104); and
a set of seals for sealing between the stator components of the vacuum pump, said set of seals comprising:
at least one annular seal; and
two longitudinal seals (20, 22);
wherein said longitudinal seals (20, 22) are mounted to seal between longitudinal contact faces (118, 120) of said two half shells (102, 104) and said at least one annular seal is mounted to seal between one of said head plates and an end of said two half shells (102, 104), said longitudinal seals (20, 22) having end portions that abut against said at least one annular seal; and
**characterised in that**
each of said seals within said set of seals are made of a material having a stiffness of between 2.4 and 4.2 N/mm per mm length, wherein said stiffness is measured by axially compressing at room temperature an O-ring of said material, said O-ring having a cross section diameter of 3.4mm and an internal diameter of at least 40mm.

2. A vacuum pump according to claim 1, wherein said seals of said set of seals is made of a material having a hardness between 73 - 83, preferably 75 - 81 on the Shore A hardness scale.

3. A vacuum pump according to claim 1 or 2, wherein said seals of said set of seals is made of a material having 74 - 80 on the Shore A hardness scale.

4. A vacuum pump according to claim 1, 2 or 3, wherein said stiffness of said material is between 2.6 and 3.8 N/mm per mm length.

5. A vacuum pump according to any one of claims 1 to 4, wherein said stiffness of said material is between 2.8 and 3.4 N/mm per mm length.

6. A set of seals according to any preceding claim, wherein said material is a nitride or a fluorinated elastomer.

7. A vacuum pump according to any preceding claim wherein said material is a material resistant to temperatures in excess of 200 °C.

8. A vacuum pump according to any preceding claim, wherein said material comprises a perfluoroelastomer.

9. A vacuum pump according to any preceding claim, wherein said annular seal and said longitudinal seals (20, 22) are formed from a same material.

10. A vacuum pump according to any preceding claim, wherein said longitudinal seal (20, 22) has a thickness of more than 1.5 mm.

11. A vacuum pump according to any preceding claim, wherein said longitudinal seal (20, 22) has a thickness of more than 1.8 mm, preferably more than 2.2 mm.

12. A vacuum pump according to any preceding claim, wherein at least one end of said longitudinal seal (20, 22) configured to abut against said annular seal comprises a flat end surface prior to said seal being compressed.

## Patentansprüche

1. Vakuumpumpe, umfassend einen drehbar in einem Stator montierten Rotor, wobei der Stator umfasst:
zwei Halbschalen (102, 104), die mindestens eine Pumpenkammer (106, 108, 110, 112, 114, 116) definieren; und
zwei Kopfplatten, die an jeweils einem Ende der zwei Halbschalen (102, 104) montiert sind;
einen Satz von Dichtungen zum Abdichten zwischen den Statorkomponenten der Vakuumpumpe, wobei der Satz von Dichtungen umfasst:
mindestens eine ringförmige Dichtung;
und zwei längliche Dichtungen (20; 22);
wobei die länglichen Dichtungen (20, 22) montiert sind, um Abdichtung zwischen länglichen Kontaktflächen (118, 120) der zwei Halbschalen (102, 104) herzustellen und die mindestens eine ringförmige Dichtung montiert ist, um Abdichtung zwischen einer der Kopfplatten und einem Ende der zwei Halbschalen (102, 104) herzustellen, wobei die Längsdichtungen (20, 22) Endabschnitte aufweisen, die an die mindestens eine ringförmige Dichtung angrenzen; und
**dadurch gekennzeichnet, dass**
jede von den Dichtungen innerhalb des Satzes von Dichtungen aus einem Material hergestellt ist, das eine Steifigkeit zwischen 2,4 und 4,2 N/mm pro mm Länge aufweist, wobei die Steifigkeit durch axiales Zusammendrücken eines O-Rings aus diesem Material bei Raumtemperatur gemessen wird, wobei der O-Ring einen Querschnittsdurchmesser von 3,4 mm und einen Innendurchmesser von mindestens 40 mm aufweist.

2. Vakuumpumpe nach Anspruch 1, wobei die Dichtungen aus dem Satz von Dichtungen aus einem Material mit einer Härte zwischen 73-83, vorzugsweise 75-81 auf der Shore-A-Härteskala hergestellt sind.

3. Vakuumpumpe nach Anspruch 1 oder 2, wobei die Dichtungen aus dem Satz von Dichtungen aus einem Material mit einer Härte zwischen 74-80 auf der Shore-A-Härteskala hergestellt sind.

4. Vakuumpumpe nach Anspruch 1, 2 oder 3, wobei die Steifigkeit des Materials zwischen 2,6 und 3,8 N/mm pro mm Länge beträgt.

5. Vakuumpumpe nach einem der Ansprüche 1 bis 4, wobei die Steifigkeit des Materials zwischen 2,8 und 3,4 N/mm pro mm Länge beträgt.

6. Satz von Dichtungen nach einem der vorhergehenden Ansprüche, wobei das Material ein Nitrid oder ein fluoriertes Elastomer ist.

7. Vakuumpumpe nach einem der vorhergehenden Ansprüche, wobei das Material ein Material ist, das Temperaturen von über 200 °C widersteht.

8. Vakuumpumpe nach einem der vorhergehenden Ansprüche, wobei das Material ein Perfluorelastomer umfasst.

9. Vakuumpumpe nach einem der vorhergehenden Ansprüche, wobei die ringförmige Dichtung und die länglichen Dichtungen (20, 22) aus einem gleichen Material gebildet sind.

10. Vakuumpumpe nach einem der vorhergehenden Ansprüche, wobei die längliche Dichtung (20, 22) eine Dicke von mehr als 1,5 mm aufweist.

11. Vakuumpumpe nach einem der vorhergehenden Ansprüche, wobei die längliche Dichtung (20, 22) eine Dicke von mehr als 1,8 mm, vorzugsweise mehr als 2,2 mm aufweist.

12. Vakuumpumpe nach einem der vorhergehenden Ansprüche, wobei mindestens ein Ende der länglichen Dichtung (20, 22), das dazu konfiguriert ist, an die ringförmige Dichtung anzugrenzen, eine flache Abschlussfläche umfasst, bevor die Dichtung zusammengedrückt wird.

## Revendications

1. Pompe à vide comprenant un rotor monté en rotation à l'intérieur d'un stator, ledit stator comprenant :
Deux demi-coques (102, 104) définissant au moins une chambre de pompage (106, 108, 110, 112, 114, 116) ; et
Deux plaques de tête montées au niveau de chaque extrémité desdites deux demi-coques (102, 104) ;
Et
Un ensemble de joints d'étanchéité destiné à assurer l'étanchéité entre les composants de stator de la pompe à vide, ledit ensemble de joints d'étanchéité comprenant :
Au moins un joint d'étanchéité annulaire ; et
Deux joints d'étanchéité longitudinaux (20, 22) ;
dans laquelle lesdits joints d'étanchéité longitudinaux (20, 22) sont montés pour assurer l'étanchéité entre des faces de contact longitudinales (118, 120) desdites deux demi-coques (102, 104) et ledit au moins un joint d'étanchéité annulaire est monté pour assurer l'étanchéité entre une desdites plaques de tête et une extrémité desdites deux demi-coques (102, 104), lesdits joints d'étanchéité longitudinaux (20, 22) ayant des parties d'extrémité qui butent contre ledit au moins un joint d'étanchéité annulaire ;
et
**Caractérisée en ce que**
Chacun desdits joints d'étanchéité à l'intérieur dudit ensemble de joints d'étanchéité est composé d'un matériau ayant une rigidité entre 2,4 et 4,2 N/mm par mm de longueur, dans laquelle ladite rigidité est mesurée en compressant axialement à température ambiante un joint torique dudit matériau, ledit joint torique ayant un diamètre de section transversale de 3,4 mm et un diamètre interne d'au moins 40 mm

2. Pompe à vide selon la revendication 1, dans laquelle lesdits j oints d'étanchéité dudit ensemble de joints d'étanchéité sont composés d'un matériau ayant une dureté entre 73 et 83, de préférence 75 et 81 sur l'échelle de dureté Shore A.

3. Pompe à vide selon la revendication 1 ou 2, dans laquelle lesdits joints d'étanchéité dudit ensemble de joints d'étanchéité sont composés d'un matériau ayant 74 à 80 sur l'échelle de dureté Shore A.

4. Pompe à vide selon la revendication 1, 2 ou 3, dans laquelle ladite rigidité dudit matériau est comprise entre 2,6 et 3,8 N/mm par mm de longueur.

5. Pompe à vide selon l'une quelconque des revendications 1 à 4, dans laquelle ladite rigidité dudit matériau est comprise entre 2,8 et 3,4 N/mm par mm de longueur.

6. Ensemble de joints d'étanchéité selon une quelconque revendication précédente, dans lequel ledit matériau est un nitrure ou un élastomère fluoré.

7. Pompe à vide selon une quelconque revendication précédente dans laquelle ledit matériau est un matériau résistant à des températures excédant 200 °C.

8. Pompe à vide selon une quelconque revendication précédente, dans laquelle ledit matériau comprend un perfluoroélastomère.

9. Pompe à vide selon une quelconque revendication précédente, dans laquelle ledit joint d'étanchéité annulaire et lesdits joints d'étanchéité longitudinaux (20, 22) sont formés d'un même matériau.

10. Pompe à vide selon une quelconque revendication précédente, dans laquelle ledit joint d'étanchéité longitudinal (20, 22) a une épaisseur de plus de 1,5 mm

11. Pompe à vide selon une quelconque revendication précédente, dans laquelle ledit joint d'étanchéité longitudinal (20, 22) a une épaisseur de plus de 1,8 mm, de préférence de plus de 2,2 mm

12. Pompe à vide selon une quelconque revendication précédente, dans laquelle au moins une extrémité dudit joint d'étanchéité longitudinal (20, 22) configurée pour buter contre ledit joint d'étanchéité annulaire comprend une surface d'extrémité plate avant que ledit joint d'étanchéité ne soit compressé.
